Europäisches Patentamt

European Patent Office

Office européen des brevets

(11) Numéro de publication: **0 096 828**
**A1**

## (12) DEMANDE DE BREVET EUROPEEN

(21) Numéro de dépôt: **83105580.1**

(22) Date de dépôt: **07.06.83**

(51) Int. Cl.³: **H 04 B 3/23**

(30) Priorité: **11.06.82 FR 8210196**

(43) Date de publication de la demande: **28.12.83**
**Bulletin 83/52**

(84) Etats contractants désignés: **BE DE FR GB IT LU NL SE**

(71) Demandeur: **COMPAGNIE INDUSTRIELLE DES TELECOMMUNICATIONS CIT-ALCATEL S.A. dite:, 12, rue de la Baume, F-75008 Paris (FR)**

(72) Inventeur: **Surie, Serge, 60, rue Bronzac, F-94240 L'hay des roses (FR)**

(74) Mandataire: **Weinmiller, Jürgen et al, Zeppelinstrasse 63, D-8000 München 80 (DE)**

(54) **Annuleur d'écho pour transmission de données.**

(57) Cet annuleur d'écho pour système de transmission de données en duplex intégral utilisant des symboles multivalents à Q valeurs possibles se place dans un terminal entre le codeur de l'émetteur et l'entrée du récepteur et comporte, pour la synthèse de la copie d'écho, un sélecteur (32) triant les symboles délivrés par le codeur en fonction de leurs valeurs et délivrant sur Q sorties distinctes des signaux binaires chacun représentatif de l'émission en cours ou non des symboles d'une valeur déterminée, Q filtres transversaux (30, 31) connectés aux sorties du sélecteur engendrant chacun la copie de la composante d'écho due à l'émission des symboles d'une valeur déterminée et un circuit sommateur (33) effectuant la somme des diverses composantes d'écho délivrées par les filtres transversaux.

## Annuleur d'écho pour transmission de données

La présente invention concerne un annuleur d'écho pour transmission de données en duplex intégral.

Dans une transmission de données en duplex intégral entre deux terminaux ou modems reliés par un canal de transmission, le signal reçu à chaque terminal est parasité par le signal de l'émetteur local en raison de fuites directes et indirectes entre émetteur et récepteur d'un même terminal. Les fuites directes, de loin les plus importantes, sont dues à une séparation imparfaite des voies émission et réception à l'intérieur du terminal considéré, cette séparation se faisant en général à l'aide d'un coupleur hybride dont l'efficacité de l'ordre de 10 à 20 dB est nettement insuffisante en regard de l'affaiblissement du canal de transmission qui peut atteindre et dépasser 40 dB. Les fuites indirectes sont dues à des réflexions sur des désadaptations d'impédance en des points du canal de transmission plus ou moins éloignés du terminal considéré.

Pour résorber ces échos parasites dans lesquels le signal de réception est noyé, il est d'usage d'équiper chaque terminal d'un dispositif dit annuleur d'écho qui engendre une copie d'écho à partir du signal émis par ce terminal et la retranche du signal reçu à ce terminal. Dans le cas de canaux de transmission dont les caractéristiques sont mal connues ou varient avec le temps, comme par exemple les canaux de transmission empruntant le réseau téléphonique commuté, on emploie des annuleurs d'écho adaptatifs qui ajustent continuellement leur copie d'écho à l'écho réel et dont l'adaptativité est basée sur la non corrélation des signaux de données émis et reçus à un même terminal.

La plupart des annuleurs d'écho adaptatifs sont réalisés à l'aide d'un filtre transversal à domaine de temps et à coefficients de pondération asservis et d'un soustracteur. Le filtre transversal a un écart entre prises inférieur en durée à l'intervalle de Nyquist (inverse du double de la fréquence maximale du signal transmis) ; il reçoit le signal de sortie de l'émetteur, synthétise la réponse impulsionnelle du trajet d'écho et engendre une copie d'écho par convolution de cette réponse impulsionnelle avec le signal de sortie de l'émetteur. Le soustracteur retranche la copie d'écho du signal de réception et délivre le signal d'entrée du récepteur qui sert en outre à l'adaptation des coefficients du filtre transversal.

Le filtre transversal à coefficients asservis est coûteux à réaliser sous forme numérique car il nécessite des opérations arithmétiques à cadence élevée sur des grandeurs : coefficients de pondération, échantillons des signaux émis et reçus dans le terminal qui doivent être codés avec un nombre important de bits. Aussi a t-on déjà proposé de synthétiser la copie d'écho non pas à partir du signal de sortie de l'émetteur mais à partir des données à émettre et plus exactement à partir des symboles multivalents qui leur sont substitués par codage à l'émission et dont découle le signal de sortie de l'émetteur par une opération de filtrage de mise en forme éventuellement suivie d'une modulation de porteuse.

En effet les symboles multivalents peuvent être codés en binaire avec un nombre restreint de bits en raison de leur nombre limité de valeurs et le filtrage de mise en forme peut être considéré comme faisant partie du trajet d'écho. En cas de modulation d'une porteuse, un modulateur est adjoint à la sortie du filtre transversal et un démodulateur à l'entrée de réglage de ses coefficients.

Les annuleurs d'écho précités qui synthétisent une copie d'écho par un simple filtrage linéaire sont perturbés par les phénomènes de non-linéarité définie par une dissymétrie affectant le chemin d'écho au niveau du filtrage de mise en forme de l'émetteur et le long de la liaison. Ils sont notamment considérablement gênés par une tension continue de décalage d'amplificateur superposée au signal reçu.

On connait d'autres annuleurs d'écho comportant, à la place du filtre transversal, une mémoire qui stocke les différentes valeurs de l'écho correspondant aux différentes valeurs possibles du symbole en cours d'émission et de ceux l'ayant précédé sur une certaine durée et contribuant pour une part non négligeable à l'écho instantané. Cette mémoire est adressée par les valeurs effectives des symboles émis sur ladite durée et complétée par un asservissement assurant la mise à jour de ses valeurs. Ces annuleurs d'écho qui ne procèdent plus par filtrage linéaire pour engendrer la copie d'écho sont beaucoup moins sensibles aux non-linéarités. En contre partie, leur réalisation réclame une capacité mémoire égale à $Q^n$ x p échantillons de la copie d'écho, Q étant la valence des symboles, n le nombre de symboles successifs à prendre en compte pour l'écho et p le nombre d'échantillons par symbole, qui est considérable par rapport aux nombres n x p de coefficients à mémoriser dans les annuleurs d'échos numériques à filtre transversal de mêmes performances et qui limite sérieusement leur utilisation.

Pour écarter cette limitation, il a été proposé, dans le cas d'une transmission utilisant des symboles bivalents d'amplitude + 1 ou -1, de ne mettre en mémoire que la contribution à l'écho d'un symbole positif en fonction de sa position par rapport au symbole en cours d'émission, la contribution d'un symbole négatif étant déduite par une simple inversion de signe et d'obtenir la copie d'écho par sommation des contributions individuelles. La capacité mémoire est réduite à n x p mais on aboutit en fait à la réalisation d'un filtre transversal adaptatif classique et l'on perd l'insensibilité initiale aux non linéarités.

La présente invention a pour but un annuleur d'écho numérique peu sensible aux non-linéarités du chemin d'écho avec une capacité mémoire réduite.

Elle a pour objet un annuleur d'écho pour transmission de données en duplex intégral entre deux terminaux qui sont reliés par un canal de transmission et qui comportent chacun un récepteur de données et un émetteur de données pourvu d'un codeur transformant les données à émettre en symboles multivalents pouvant prendre Q valeurs distinctes, ledit annuleur d'écho étant connecté dans un terminal entre la sortie du codeur de l'émetteur et l'entrée du récepteur de données et étant caractérisé en ce qu'il comporte :

- un sélecteur connecté en sortie du codeur triant les symboles en fonction de leur valeur et délivrant sur Q sorties distinctes Q signaux binaires chacun représentatif de l'émission en cours ou non des symboles d'une valeur déterminée

- Q filtres transversaux à coefficients asservis connectés aux Q sorties du sélecteur et engendrant chacun la copie de la composante d'écho due à l'émission des symboles d'une valeur déterminée,

- un circuit sommateur effectuant la somme des composantes d'écho délivrées par les Q filtres transversaux,

- et un soustracteur retranchant la copie du signal d'écho délivrée par le circuit sommateur du signal de réception du terminal et fournissant le

- 4 -

0096828

signal d'entrée du récepteur de données et d'asservissement des coefficients des filtres transversaux.

Dans cet annuleur d'écho, les traitements séparés des symboles de valeurs différentes permet de s'affranchir des non-linéarités apparaissant à l'émission au cours du filtrage de mise en forme ainsi que de corriger une éventuelle tension continue affectant le signal de réception.

Les différents filtres transversaux et le sélecteur peuvent être réalisés par une structure commune comportant :

- des moyens pour fractionner le motif constitué par le symbole en cours d'émission dans le terminal considéré et les symboles précédemment émis contribuant pour une part non négligeable à l'écho instantané, en sections successives d'au moins un symbole

- et des moyens mémoire, en nombre égal à celui des sections, adressés chacun par une section déterminée du motif, mémorisant chacun les différentes valeurs de la contribution à l'écho correspondant aux différentes valeurs possibles des symboles de la section du motif qui l'adresse.

Le circuit sommateur effectue alors la somme des valeurs de contribution à l'écho délivrés par les moyens mémoire au cours de leur adressage par les sections du motif.

D'autres caractéristiques et avantages de l'invention ressortiront des revendications jointes et de la description ci-après de deux modes de réalisation donnés à titre d'exemple. Cette description sera faite en regard du dessin dans lequel :

- la figure 1 représente un annuleur d'écho au sein d'un terminal de transmission de données,

- la figure 2 montre la structure canonique d'un filtre numérique transversal,

- la figure 3 montre un circuit de synthèse d'écho appartenant à un annuleur d'écho selon l'invention,

- et la figure 4 illustre une forme possible de réalisation du circuit de la figure 3.

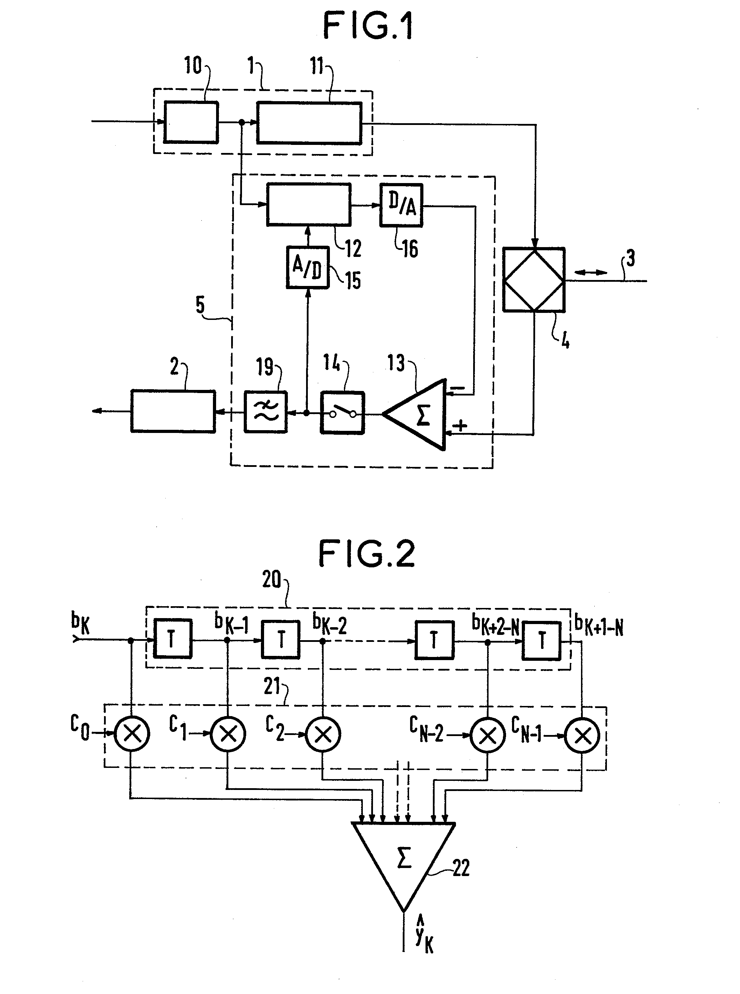

La figure 1 permet de situer un annuleur d'écho dans un terminal de transmission de données en duplex intégral et en bande de base. Le terminal comporte un émetteur 1 et un récepteur 2 couplés à une même ligne de transmission bifilaire 3 par l'intermédiaire d'un coupleur hybride 4 et d'un annuleur d'écho 5.

L'émetteur de données 1 reçoit en entrée une ou plusieurs suites synchrones de données qui sont transformées dans un codeur 10 en une suite synchrone de symboles multivalents $\{a_k\}$ de débit $1/\Delta$ inverse de l'intervalle Baud soumis à un filtre de mise en forme 11 de réponse impulsionnelle $f(t)$. Le signal délivré par l'émetteur de données 1 peut être noté :

$$x(t) = \sum_k a_k \, f(t-k\,\Delta)$$

Le coupleur hybride 4 assure la séparation 2 fils/4 fils. Cette dernière étant toujours imparfaite en raison du déséquilibrage aux deux extrémités de la liaison et d'éventuelles hétérogénéités dans le support du chemin de transmission (fils de diamètres différents mis bout à bout), le récepteur reçoit un écho $y(t)$ que l'on peut modéliser comme une version filtrée du signal $x(t)$ de l'émetteur de données :

$$y(t) = x(t) \ast g(t)$$

$g(t)$ étant la réponse impulsionnelle d'écho aux bornes du coupleur hybride 4. Cet écho $y(t)$ peut également s'écrire :

$$y(t) = \sum_{k=-\infty}^{+\infty} a_k \, h(t-k\,\Delta)$$

avec

$$h(t) = f(t) \ast g(t)$$

où $h(t)$ représente la réponse impulsionnelle globale du chemin d'écho.

Cette dernière formulation met en évidence que l'écho peut s'exprimer en fonction des symboles $\{a_k\}$ directement disponibles sous forme binaire, ce qui simplifie la réalisation numérique de l'annuleur d'écho.

L'annuleur d'écho 5 comporte essentiellement un circuit adaptatif 12 qui engendre une copie de l'écho $\hat{y}(t)$ à partir des symboles $\{a_k\}$ et s'adapte aux caractéristiques du chemin d'écho au moyen d'un signal d'erreur constitué par le signal d'entrée du filtre 19, et un soustracteur 13 retranchant la copie d'écho du signal de réception délivré par le coupleur hybride 4.

Tel que représenté, l'annuleur d'écho 5 est de type numérique à soustraction d'écho analogique. Le circuit adaptatif 12 fonctionne en numérique avec suréchantillonnage de sa sortie par rapport à son entrée, le signal d'écho ayant une fréquence maximale supérieure à celle des symboles en raison de la largeur de bande du filtre de mise en forme. Il délivre des échantillons de la valeur instantanée d'une copie d'écho à une cadence $1/T$ multiple de la cadence Baud $1/\Delta$, calculés à partir d'une suite numérique de symboles $\left\{b_K\right\}$ à la cadence $1/T$ formée de la suite des symboles $\left\{a_k\right\}$ disponibles sous forme numérique à la cadence $1/\Delta$ en sortie du codeur 10 et complétée par $(\Delta/)T-1$ valeurs nulles intercalées entre chaque symbole.

Le circuit adaptatif 12 reçoit également, par l'intermédiaire d'un échantillonneur 14 fonctionnant à la cadence $1/T$ et d'un convertisseur digital 15 le signal du soustracteur analogique 13 à partir duquel il s'adapte aux caractéristiques du trajet d'écho. La copie numérique d'écho qu'il délivre est appliquée à l'entrée soustractive du soustracteur analogique 13 par l'intermédiaire d'un convertisseur digital analogique 16 fonctionnant à la cadence $1/T$. Un filtre passe-bas 19 élimine les bruits d'échantillonnage dus à la périodicité du spectre à l'entrée du récepteur 2.

Si le système de transmission n'est pas en bande de base comme celui représenté, mais a des émetteurs à modulation de porteuse, l'annuleur d'écho est complété par un modulateur de porteuse et un démodulateur de porteuse intercalés entre son circuit adaptatif et le soustracteur 13.

La plupart du temps, le circuit adaptatif 12 est un filtre numérique transversal à coefficients de pondération asservis et à intervalle de temps unitaire T. La figure 2 illustre la structure canonique d'un filtre numérique transversal à intervalle de temps unitaire T avec sa ligne à retard 20 à prises intermédiaires et retard unitaire T, son banc de multiplicateurs 21 pondérant les signaux disponibles sur les prises de la ligne à retard et son sommateur 22 additionnant les signaux provenant du banc de multiplicateurs.

Soient $\left\{ b_K \right\}$ la suite de symboles appliquée à la ligne à retard 20, $C_o...C_{N-1}$ les coefficients du banc de multiplicateurs 21, la copie d'écho $\hat{y}_K$ délivrée par le sommateur 22 a pour expression :

$$\hat{y}_K = \sum_{i=o}^{N-1} b_{K-i}\, C_i$$

Les différents coefficients de pondération $C_i$ forment un échantillonnage à $1/T$ de la réponse impulsionnelle du filtre transversal. Pour obtenir une copie d'écho, il est nécessaire qu'ils se rapprochent au mieux de l'échantillonnage à $1/T$ de la réponse impulsionnelle $y_K$ du chemin de l'écho réel qui, en l'absence de non-linéarité peut s'écrire :

$$y_K = \sum_{i=o}^{N-1} b_{K-i}\, r_i$$

où $r_i$ représente la réponse échantillonnée à la fréquence $1/T$ du chemin d'écho réel.

Pour cela, il faut que la réponse impulsionnelle du filtre transversal soit de même durée que celle de l'écho et que l'on ait :

$$C_i = r_i$$

La convergence des coefficients de pondération $C_i$ du filtre transversal vers les valeurs $r_i$ s'obtient de manière bien connue par des asservissements qui sont pilotés à l'aide du signal de réception et utilisent la non-corrélation entre les signaux des deux sens de transmission.

La synthèse d'une copie d'écho par filtrage linéaire des symboles émis présuppose un comportement linéaire du chemin d'écho. Elle est perturbée et même rendue impossible par des phénomènes de dissymétrie se produisant dans les différents amplificateurs de la liaison et dans l'émetteur au niveau du filtrage de mise en forme. En particulier, il est courant d'avoir une tension continue $V_o$ superposée au signal de réception qui est due à des tensions de décalage d'amplificateurs. Celle-ci donne à l'écho réel une expression de la forme :

$$y_K = \sum_{i=0}^{N-1} b_{K-i} \, r_i + V_o$$

qui ne peut être reproduite pour le signal de copie d'écho par un simple ajustement des coefficients de pondération $C_i$, une correction de ces derniers jouant dans un sens ou dans l'autre, selon le signe du symbole $b_{K-i}$. Principalement, on n'a jamais en pratique la même réponse impulsionnelle du canal d'écho pour les différentes valeurs de symboles.

Comme indiqué précédemment, ces dissymétries affectent peu les annuleurs d'écho qui mémorisent directement toutes les valeurs de l'écho en fonction des diverses valeurs possibles pour le symbole en cours d'émission et ceux déjà émis participant encore à l'écho. Mais ces annuleurs d'écho nécessitent une capacité de mémoire considérable dans la plupart des applications. En effet si n est le nombre de symboles émis à prendre en considération pour l'écho, Q le nombre de valeurs possibles pour un symbole et p le taux de suréchantillonnage, l'écho peut prendre $Q^n$ x p valeurs distincts ce qui est dans la plupart des applications un nombre beaucoup plus élevé que celui n x p des coefficients de pondération à prendre en considération avec un simple filtre transversal.

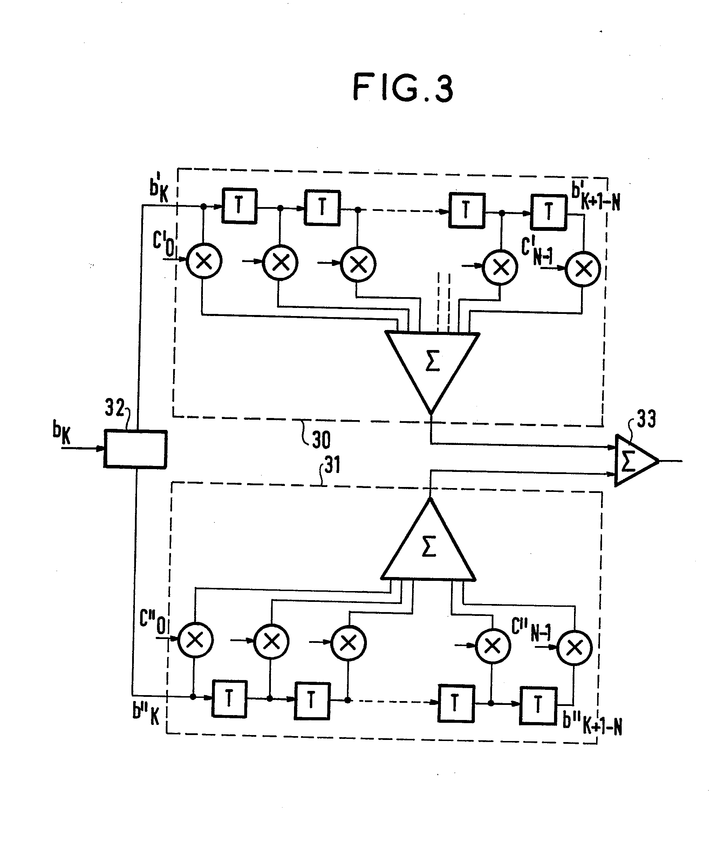

Il est possible de s'affranchir des dissymétries du canal d'écho en synthétisant séparément les composantes d'écho dues à chacune des valeurs de symbole au moyen de filtres transversaux adaptatifs indépendants. Cela exige Q fois plus de coefficients de pondération qu'avec un seul filtre transversal mais ces coefficients sont mis à jour Q fois moins souvent ce qui rend inchangée la fréquence de fonctionnement. Cette synthèse séparée permet, par la même occasion, de corriger une composante continue présente dans le signal de réception. On s'en rendra compte facilement à l'étude de la figure 3 qui représente un circuit de synthèse d'écho pour un système de transmission de données utilisant des symboles bivalents.

Le circuit de la figure 3 se compose essentiellement de deux filtres numériques transversaux adaptatifs 30, 31 identiques, à intervalle de temps unitaire T, munis d'asservissements classiques pour la convergence de leurs coefficients de pondération, précédés d'un sélecteur 32 triant les symboles en fonction de leurs valeurs et suivis d'un additionneur 33.

Les symboles bivalents $a_k$ délivrés par le codeur 10 de l'émetteur peuvent prendre deux valeurs distinctes de même amplitude et de signes opposés qui peuvent être repérées par $\pm$ 1. Ils sont remplacés à l'entrée du sélecteur 32 par la suite $\{b_K\}$ découlant du suréchantillonnage.

C'est une suite ternaire de valeurs 0, $\pm$ 1 qui est partagée par le sélecteur 32 en deux suites binaires de valeurs 0,1, l'une $\{b'_K\}$ définie par :

$$b'_K = \begin{cases} 1 & \text{si } b_K = 1 \\ 0 & \text{si } b_K = 0, -1 \end{cases}$$

et appliquée au filtre adaptatif transversal 30 ayant des coefficients de pondération $C'_i$ l'autre $\{b''_K\}$ définie par :

$$b''_K = \begin{cases} 1 & \text{si } b_K = -1 \\ 0 & \text{si } b_K = 1,0 \end{cases}$$

et appliquée au filtre transversal 31 ayant des coefficients de pondération $C''_i$

Il en résulte, en sortie de l'additionneur 33 un signal de copie d'écho de la forme :

$$\hat{y}_K = \sum_{i=o}^{N-1} b'_{K-i}\, C'_i + b''_{K-i}\, C''_i$$

En supposant que le chemin d'écho ait des réponses impulsionnelles distinctes $r'$ et $r''$ pour les deux valeurs de symboles $\pm$ 1 et qu'il y ait une composante continue dans le signal de réception, l'écho réel $y_K$ peut s'écrire

$$y_K = \sum_{i=o}^{N-1} (b'_{K-i}\, r'_i - b''_{K-i}\, r''_i) + V_o$$

En remarquant que N/p termes $b'_{K-i}$ et $b''_{K-i}$ sont égaux à un et que les autres sont nuls, l'écho réel $y_K$ peut également s'écrire

$$y_K = \sum_{i=0}^{N-1} b'_{K-i} \left(r'_i + \frac{p}{N} V_o\right) - b''_{K-i} \left(r''_i - \frac{p}{N} V_o\right)$$

de sorte qu'il apparait provenir d'un chemin d'écho ayant pour les symboles de valeur + 1 une réponse impulsionnelle $r'$ translatée de $\frac{p}{N} V_o$ et pour les symboles de valeur - 1 une réponse impulsionnelle translatée de $- \frac{p}{N} V_o$ qui sont l'une et l'autre synthétisables par les filtres transversaux 30 et 31 dont les asservissements font converger les coefficients de pondération $C'_i$ et $C''_i$ vers les valeurs :

$$C'_i = r'_i + \frac{p}{N} V_o$$

$$C''_i = - r''_i + \frac{p}{N} V_o$$

Les suites $\left\{b'_K\right\}$ et $\left\{b''_K\right\}$ constituent des signaux binaires de présence ou d'absence à l'émission des symboles d'une valeur particulière. Leurs valeurs simples 0 ou 1 simplifient les opérations de multiplication par les coefficients de pondération qui se réduisent à la présentation ou non de ceux-ci à l'additionneur de sortie 33 et peuvent être réalisées par simple adressage d'une mémoire.

Le circuit de la figure 3 se généralise facilement à un système de transmission employant des symboles pouvant prendre plus de deux valeurs en prévoyant autant de filtres transversaux adaptatifs identiques que de valeurs de symbole et en les connectant à la suite d'un sélecteur ayant autant de sorties que de valeurs de symbole et délivrant sur chacune d'elles un signal binaire représentatif de la présence ou de l'absence à l'émission d'un symbole d'une valeur déterminée.

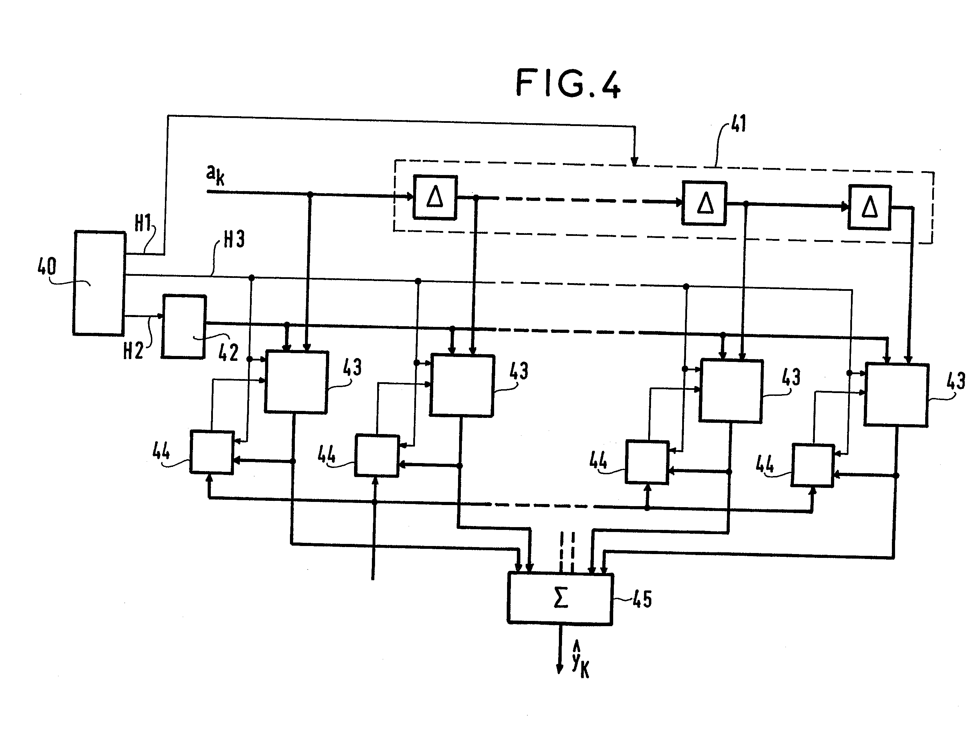

La figure 4 représente un mode de réalisation d'un circuit de synthèse d'écho analogue à celui de la figure 3 prévu pour un système de transmission employant des symboles à Q valeurs possibles. Dans ce mode de réalisation les Q filtres transversaux adaptatifs indépendants qui réalisent la synthèse de la contribution à l'écho de chacune des valeurs de symbole émises traitent des signaux binaires représentatifs de la présence ou non à l'émission des symboles des valeurs considérées ce qui permet de réaliser leurs multiplications internes par simple adressage de mémoires de coefficients. On profite du fait qu'à chaque instant d'échantillonnage ou de suréchantillonnage on n'utilise au plus qu'un coefficients de pondération parmi ceux de même rang des Q filtres transversaux pour regrouper les coefficients de pondération de même rang dans des mémoires communes ce qui permet d'effectuer la sélection entre les valeurs de symbole au niveau de l'adressage de ces mémoires et d'utiliser une ligne à retard commune aux Q filtres transversaux recevant un signal binaire à Q états représentatif de la valeur du symbole émis délivré par le codeur.

Une base de temps 40 délivre trois signaux d'horloge $H_1$, $H_2$, $H_3$. Le premier signal d'horloge est à la fréquence Baud 1/$\Delta$ et cadence un registre à décalage 41. Le deuxième signal d'horloge $H_2$ est à la fréquence de suréchantillonnage p/$\Delta$ et incrémente un compteur par p à sorties parallèles 42. Le troisième signal d'horloge $H_3$ au double de la fréquence de suréchantillonnage contrôle la commande de lecture écriture de mémoires de coefficients 43 et de circuits de mise à jour 44 qui leur sont associés.

Le registre à décalage 41 sert, en combinaison avec le compteur 42, de ligne à retard à prises intermédiaires et à intervalle unitaire entre prises T commune aux Q filtres transversaux. Il a une sortie à chaque étage et un nombre d'étages N-1 suffisant pour contenir le motif formé par les symboles émis contribuant pour une part non négligeable à l'écho instantané. Ce motif complété par le symbole en cours d'émission est fractionné en sections formées d'un symbole disponibles à l'entrée et aux sorties du registre à décalage 41.

Les coefficients des Q filtres transversaux sont regroupés dans les mémoires 43 au nombre de n, une par entrée et sorties du registre à décalage 41 qui ont chacune une capacité de p x Q mots et qui sont adressées par le signal à Q états de l'entrée ou d'une sortie du registre à décalage 41 complété par le signal à p états du compteur 42.

Chaque circuit de mise à jour 44 intercalé entre la sortie lecture et l'entrée écriture d'une mémoire 43 est formé d'un registre de recopie qui est connecté à la sortie lecture de la mémoire considérée et dont l'inscription commandée par le signal d'horloge $H_3$ coïncide avec la lecture de ladite mémoire, et d'un additionneur incrémentant la valeur contenue dans le registre de recopie d'une valeur proportionnelle à un signal d'erreur constituée du signal de réception après annulation d'écho.

Un additionneur 45 connecté aux sorties lecture des mémoires 43 fournit le signal de copie d'écho.

Il est possible de diminuer le nombre des mémoires 43 en augmentant leur capacité et en réalisant leur adressage à partir des signaux de plusieurs étages du registre à décalage 41. Cela revient à fractionner le motif de symboles, présent sur les entrée et sorties du registre à décalage 41 en sections de plusieurs symboles et à stocker dans les mémoires des sommes partielles des produits de convolution effectués par les Q filtres transversaux qui correspondent aux contributions à l'écho des différentes formes possibles des sections de motif. On diminue ainsi la capacité de l'accumulateur 45 et le nombre des circuits de mise à jour avec, en contre partie, une augmentation de la capacité des mémoires.

0096828

REVENDICATIONS

1/ Annuleur d'écho pour transmission de données en duplex intégral entre deux terminaux qui sont reliés par un canal de transmission et qui comportent chacun un récepteur de données (2) et un émetteur de données (1) pourvu d'un codeur (10) transformant les données à émettre en symboles multivalents pouvant prendre Q valeurs distinctes, ledit annuleur d'écho étant connecté dans un terminal entre la sortie du codeur (10) de l'émetteur (1) et l'entrée du récepteur (2), et caractérisé en ce qu'il comporte :

- un sélecteur (32) connecté en sortie du codeur (10) triant les symboles en fonction de leurs valeurs et délivrant sur Q sorties distinctes Q signaux binaires chacun représentatif de l'émission en cours ou non des symboles d'une valeur déterminée,

- Q filtres transversaux à coefficients asservis (30, 31) connectés aux Q sorties du sélecteur (32) engendrant chacun la copie d'une composante d'écho due à l'émission des symboles d'une valeur déterminée,

- un circuit sommateur (33) effectuant la somme des composantes d'écho délivrées par les Q filtres transversaux

- et un soustracteur (13) retranchant la copie du signal d'écho délivrée par le circuit sommateur (33), du signal de réception du terminal et fournissant le signal d'entrée du récepteur de données (2) et d'asservissement des coefficients des filtres transversaux (30, 31).

2/ Annuleur d'écho pour transmission de données en duplex intégral entre deux terminaux qui sont reliés par un canal de transmission et qui comportent chacun un récepteur de données (2) et un émetteur de données (1) pourvu d'un codeur (10) transformant les données à émettre en symboles multivalents pouvant prendre Q valeurs distinctes, ledit annuleur d'écho étant connecté dans un terminal entre la sortie du codeur (10) de l'émetteur (1) et l'entrée du récepteur (2), et caractérisé en ce qu'il comporte :

- des moyens (41) pour fractionner le motif constitué par le symbole en cours d'émission dans le terminal considéré et par les symboles qui ont été émis précédemment et contribuent pour une part non négligeable à l'écho instantané, en sections successives formées d'au moins un symbole,

- des moyens mémoires (43), en nombre égal à celui des sections, adressés chacun par une section déterminée du motif, mémorisant chacun les valeurs des contributions à l'écho correspondant aux différentes valeurs possibles des symboles de la section qui l'adresse

- des moyens de sommations (45) engendrant une copie du signal d'écho en additionnant les valeurs des contributions à l'écho délivrées par les moyens mémoire au cours de leur adressage par les sections du motif

- et un moyen soustracteur (13) retranchant la copie du signal d'écho délivrée par les moyens de sommation (45), du signal de réception du terminal.

1/3

FIG.1

FIG.2

0096828

# FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | EP-A-0 033 568 (T.R.T.)<br>* Page 3, lignes 7-13; page 5, ligne 35 - page 6, ligne 4; figure 1; page 21, lignes 2-6; tableau I * | 1 | H 04 B 3/23 |
| | --- | | |
| Y | DE-A-2 944 686 (SEL)<br>* Page 9, lignes 1-6 * | 1 | |
| | --- | | |
| Y | CONFERENCE ON COMMUNICATIONS EQUIPMENT AND SYSTEMS, 20-22 avril 1982, pages 65-69, Birmingham, G.B.<br>P.J. VAN GERWEN et al.: "A digital transmission unit for the local network" * Page 66, colonne de gauche, ligne 63 - colonne de droite, ligne 3 * | 2 | |
| | | | **DOMAINES TECHNIQUES RECHERCHES (Int. Cl. ³)** |
| | --- | | |
| Y | TIJDSCHRIFT VAN HET NEDERLANDS ELEKTRONICA- EN RADIOGENOOTSCHAP, vol. 42, no. 4, 1977, pages 87-92, La Haye, NL.<br>W.A.M. SNIJDERS: "Microprocessor implementatie van datamodems" * Page 88, colonne de droite, ligne 26 - page 85, colonne de gauche, ligne 6 * | 2 | H 04 B<br>H 04 L<br>H 03 H |
| | ---      -/- | | |

Le présent rapport de recherche a été établi pour toutes les revendications

| Lieu de la recherche<br>LA HAYE | Date d'achèvement de la recherche<br>25-07-1983 | Examinateur<br>LUBERICHS A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503 03 82

Office européen
des brevets

**RAPPORT DE RECHERCHE EUROPEENNE**

0096828

Numéro de la demande

EP 83 10 5580

| Catégorie | Citation du document avec indication, en cas de besoin, des parties pertinentes | Revendication concernée | CLASSEMENT DE LA DEMANDE (Int. Cl. ³) |
|---|---|---|---|
| | **DOCUMENTS CONSIDERES COMME PERTINENTS** | | Page 2 |
| A | US-A-4 162 378 (BAUDOUX et al.)<br>* Colonne 6, ligne 44 - colonne 7, ligne 2; colonne 7, lignes 30-38 * | 1 | |
| A | FR-A-2 358 707 (PHILIPS)<br>* Page 10, ligne 25 - page 11, ligne 2; figure 3 * | 1 | |

DOMAINES TECHNIQUES RECHERCHES (Int. Cl. ³)

Le présent rapport de recherche a été établi pour toutes les revendications

| Lieu de la recherche<br>LA HAYE | Date d'achèvement de la recherche<br>25-07-1983 | Examinateur<br>LUBERICHS A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO Form 1503 03 82